# EUROPÄISCHE PATENTSCHRIFT

(11) **EP 4 111 068 B1**
(45) Veröffentlichungstag und Bekanntmachung des Hinweises auf die Patenterteilung: **31.05.2023**
(21) Anmeldenummer: 20816948.2
(22) Anmeldetag: 30.11.2020
(51) Int. Cl.: F16C 33/66

(54) **LAGERANORDNUNG**
BEARING ASSEMBLY
ENSEMBLE PALIER

(30) Priorität: 26.02.2020 DE 102020104960
(43) Veröffentlichungstag der Anmeldung: 04.01.2023
(73) Patentinhaber: Voith Patent GmbH, 89522 Heidenheim (DE)
(72) Erfinder: SCHABASSER, Martin, 3123 Pfaffing (AT)
(86) Internationale Anmeldenummer: PCT/EP2020/083832
(87) Internationale Veröffentlichungsnummer: WO 2021/170270

(56) Entgegenhaltungen:
- DE-U- 1 960 565
- RU-C2- 2 161 730
- US-A- 3 679 278

## Beschreibung

Die Erfindung betrifft eine Lageranordnung, wobei die Schmierung des Lagers über ein Ölbad erfolgt. Solche Lageranordnungen kommen insbesondere in Wasserkraftwerken zum Einsatz.

Die RU 2 161 730 C2 zeigt beispielsweise eine solche Lageranordnung. Zur Vermeidung des Entweichens von Öldunst aus dem Lagergehäuse kommt eine Öldunstabsaugung zum Einsatz. Eine Öldunstabsaugung ist ein Kostenfaktor und verursacht zudem laufende Betriebskosten und einen laufenden Energieverbrauch. Meistens werden zusätzlich Messerdichtungen verwendet, welche einem Verschleiß unterliegen.

Die Aufgabe der Erfindung ist es, eine Lageranordnung anzugeben, welche ein Entweichen von Öldunst weitestgehend verhindert, ohne dass eine Öldunstabsaugung oder verschleißende Dichtungen benötigt werden.

Die Aufgabe wird erfindungsgemäß durch eine Lageranordnung entsprechend Anspruch 1 oder Anspruch 3 gelöst. Weitere vorteilhafte Merkmale der erfindungsgemäßen Ausführung finden sich in den Unteransprüchen.

Im Folgenden wird die erfindungsgemäße Lageranordnung anhand von Figuren erläutert. Die Figuren zeigen im Einzelnen:
- Fig.1: Erfindungsgemäße Lageranordnung in einer ersten Ausführungsform
- Fig.2: Erfindungsgemäße Lageranordnung in einer zweiten Ausführungsform

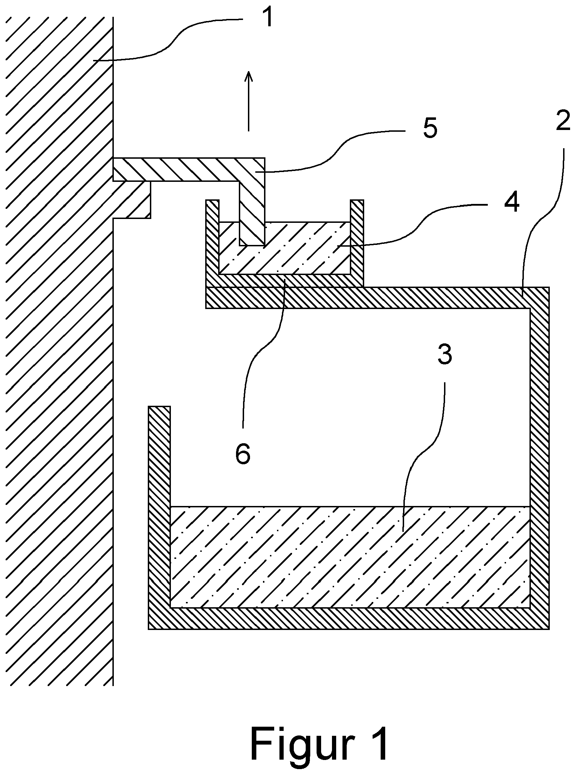

Figur 1 zeigt eine erfindungsgemäße Lageranordnung in einer ersten Ausführungsform in schematischer Darstellung. Die Lageranordnung umfasst eine Welle, welche mit 1 bezeichnet ist, ein Gehäuse, welches mit 2 bezeichnet ist, ein erstes Bad, welches mit 3 bezeichnet ist und Öl enthält, ein zweites Bad welches mit 4 bezeichnet ist und ein Fluid enthält, einen Kragen, welcher mit 5 bezeichnet ist, und eine Wanne, welche mit 6 bezeichnet ist. Bei der in Figur 1 dargestellten Ausführungsform handelt es sich um eine Ausführungsform mit vertikal angeordneter Welle 1. Das erste Bad 3 ist innerhalb des Gehäuses 2 angeordnet. Dieses Ölbad 3 dient zur Schmierung und Kühlung von Lagerflächen und Lagersegmenten, welche in Figur 1 der Übersichtlichkeit halber nicht dargestellt sind. Der Erfinder hat sich von dem Gedanken leiten lassen, dass die hauptsächliche Ursache für die Bildung von störendem Öldunst die reibungserzeugte Wärme ist, die beim Betrieb der Lageranordnung in das erste Ölbad eingetragen wird. Ohne eine Erhitzung des Öls entsteht erheblich viel weniger Öldunst. Daher hat der Erfinder ein zweites Bad 4 vorgesehen, welches lediglich zur Abdichtung des ersten Ölbads 3 dient. Das zweite Bad 4 ist in der Wanne 6 angeordnet Der Kragen 5 ist mit der Welle 1 verbunden. Der Kragen 5, das zweite Bad 4 samt Wanne 6 und das Gehäuse 2 sind so angeordnet, dass sie den in axialer Richtung jenseits des Kragens 5 gelegenen Halbraum gegen Öldunst aus dem ersten Bad 3 abdichten können. Dies wird dadurch erreicht, dass ein Teil des Kragens 5 vom Fluid des zweiten Bads 4 benetzt wird, und die Wanne 6 des zweiten Bads 4 mit dem Gehäuse 2 verbunden ist und so einen Teil des Gehäuses 2 bildet. Wobei das letztgenannte Merkmal (Wanne 6 ist mit Gehäuse 2 verbunden und damit ein Teil desselben) ein Spezifika der in Figur 1 gezeigten Ausführungsform ist.

Der kleine Pfeil in Figur 1 deutet dabei die Lage des erwähnten Halbraumes an. Es ist klar, dass kein Öldunst vom Ölbad 3 in Pfeilrichtung entweichen kann. Dagegen könnte Öldunst vom Ölbad 3 durch den Spalt zwischen dem Gehäuse 2 und der Welle 1 in den anderen Halbraum (d.h. den in Figur 1 unten gelegenen Halbraum) gelangen. Meistens ist es jedoch ausreichend eine solche Lageranordnung nur in einer Richtung gegen Öldunst abzudichten. Bei einer Wasserkraftanlage schließt sich beispielsweise in einer Richtung der Welle der Generator an. In dieser Richtung wirkt Öldunst sehr schädlich, da derselbe zu einer starken Verschmutzung des Generators und des Maschinenraumes führen kann. In der anderen Richtung schließt sich die Turbine an. Dort ist wenig Raum vorhanden, der durch eine Verschmutzung beeinträchtigt werden könnte. Daher kann in dieser Richtung oft auf eine Abdichtung verzichtet werden. Außerdem ist eine einseitige Abdichtung auch deswegen meistens ausreichend, weil dadurch bereits sichergestellt wird, dass das Lager nicht von Luft durchströmt werden kann, was zu einem starken Austrag von Öldunst führen würde. Falls auch der andere Halbraum gegen Öldunst aus dem ersten Bad 3 gedichtet werden soll, so können erfindungsgemäß einfach ein weiterer Kragen und ein weiteres Bad mit Fluid vorgesehen sein, welche auch diesen Halbraum ganz analog abdichten. Dabei wäre das weitere Bad mit Fluid in Figur 1 mit dem unteren Teil des Gehäuses 2 verbunden, und auch der weitere Kragen wäre in diesem Bereich der Welle 1 angeordnet.

Als Fluid für die zusätzlichen Bäder kommt beispielsweise Öl in Frage. Da das bzw. die lediglich zur Dichtung verwendeten Bäder keinerlei andere Aufgabe haben, kann zur Unterdrückung von Öldunst aus diesen Bädern neben der niedrigeren Temperatur derselben auch ein Öl verwendet werden, welches eine sehr niedrige Volatilität aufweist. Weiter könnte die Oberfläche dieser Ölbäder möglichst gering gehalten werden.

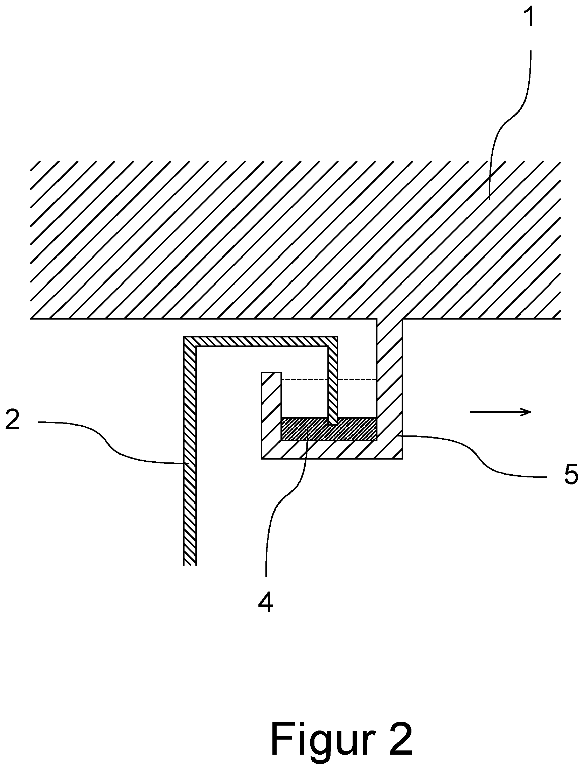

Figur 2 zeigt eine erfindungsgemäße Lageranordnung in einer zweiten Ausführungsform in schematischer Darstellung als Ausschnitt (das erste Bad ist nicht dargestellt). Die Bezeichnungen entsprechen den Bezeichnungen von Figur 1. In der in Figur 2 gezeigten Ausführungsform ist die Welle 1 horizontal angeordnet. Die Wanne für das zweite Bad 4 wird in diesem Fall durch den Kragen 5 gebildet, der daher so ausgebildet ist, dass er das zweite Bad 4 aufnehmen kann. Die Wanne ist damit Teil des rotierenden Systems der Lageranordnung. Wenn die Drehzahl der Welle 1 ausreichend hoch ist, wird sich ein rotierender Fluid- bzw. Ölring im Kragen 5 bilden. Bei einem Stillstand der Welle 1 sammelt sich das Fliud im unten liegenden Bereich des Kragens 5. Figur 2 zeigt den Zustand bei rotierender Welle 1. Die gestrichelte Linie deutet dabei die Fluidoberfläche an, die sich bei einem Stillstand der Welle 1 ergeben würde. Die Dichtwirkung kommt dadurch zustande, dass das Gehäuse 2 so geformt ist, dass es in das zweite Bad 4 eintauchen kann, wenn die Welle 1 rotiert. Der Pfeil in Figur 2 deutet wiederum die Lage des gedichteten Halbraums an.

Im Prinzip kann die Ausführungsform gemäß Figur 2 auch für vertikal orientierte Wellen verwendet werden. Dabei muss der Kragen 5 nur noch einen Steg aufweisen, der ein Auslaufen des Fluides beim Wellenstillstand aus dem zweiten Bad 4 verhindert.

Allen Ausführungsformen ist gemeinsam, dass das zweite Bad 4 so angeordnet ist, dass das darin enthaltene Fluid sowohl einen Teil des Kragens 5 als auch einen Teil des Gehäuses 2 benetzt, wenn die Welle 1 rotiert, um so den in axialer Richtung jenseits des Kragens 5 gelegenen Halbraum gegen Öldunst aus dem ersten Bad 3 abzudichten.

Abschließend sei erwähnt, dass auch andere Fluide anstelle des oben erwähnten Öls im zweiten Bad 4 verwendet werden können. Vorzugsweise kommen Fluide in Frage, welche eine niedrige Volatilität aufweisen. Es können jedoch auch Fluide verwendet werden, bei denen es nicht schädlich ist, wenn dieselben sich anderweitig, d.h. außerhalb des Lagergehäuses, niederschlagen. Bei der Verwendung von Fluiden mit größerer Volatilität (z.B. Wasser) muss dann dafür gesorgt sein, dass sich das zweite Bad nicht durch Verdunstung entleeren kann, z.B. durch eine Füllstandüberwachung und/oder durch regelmäßiges Nachfüllen des zweiten Bades. Denkbar ist auch eine Anordnung bei der das zweite Bad 4 permanent von einem Fluid durchströmt wird, sodass dadurch sichergestellt wird, dass immer genug Fluid im Bad ist.

### Bezugszeichenliste

- 1: Welle
- 2: Gehäuse
- 3: Erstes Bad
- 4: Zweites Bad
- 5: Kragen
- 6: Wanne

## Patentansprüche

1. Lageranordnung mit einer Welle (1), einem Gehäuse (2), einem ersten Bad (3), welches Öl enthält und innerhalb des Gehäuses angeordnet ist, und einem Kragen (5), welcher mit der Welle (1) verbunden ist, **dadurch gekennzeichnet, dass** die Lageranordnung ein zweites Bad (4) umfasst, welches ein Fluid enthält und so angeordnet ist, dass das darin enthaltene Fluid sowohl einen Teil des Kragens (5) als auch einen Teil des Gehäuses (2) benetzt und wobei ein Teil des Kragens (5) in das Fluid eintaucht, wenn die Welle (1) rotiert, um so den in axialer Richtung jenseits des Kragens (5) gelegenen Halbraum gegen Öldunst aus dem ersten Bad (3) abzudichten.

2. Lageranordnung nach Anspruch 1, wobei die Welle (1) vertikal angeordnet ist, und wobei das zweite Bad (4) in einer Wanne (6) angeordnet ist, und wobei die Wanne (6) mit dem Gehäuse (2) verbunden ist.

3. Lageranordnung mit einer Welle (1), einem Gehäuse (2), einem ersten Bad (3), welches Öl enthält und innerhalb des Gehäuses angeordnet ist, und einem Kragen (5), welcher mit der Welle (1) verbunden ist, **dadurch gekennzeichnet, dass** die Lageranordnung ein zweites Bad (4) umfasst, welches ein Fluid enthält, und wobei der Kragen (5) so ausgebildet ist, dass er das zweite Bad (4) aufnimmt, und wobei das Gehäuse (2) so geformt ist, dass es in das zweite Bad (4) eintaucht, wenn die Welle (1) rotiert, um so den in axialer Richtung jenseits des Kragens (5) gelegenen Halbraum gegen Öldunst aus dem ersten Bad (3) abzudichten.

4. Lageranordnung nach Anspruch 3, wobei die Welle (1) horizontal angeordnet ist.

5. Lageranordnung nach einem der vorherigen Ansprüche, wobei das Fluid Öl ist.

## Claims

1. Application of bearing comprising a shaft (1), a housing (2), a first bath (3) containing oil and arranged inside the housing, and a collar (5) connected to the shaft (1), **characterized in that** the application of bearing comprises a second bath (4) containing a fluid and so arranged that the fluid contained therein wets both a part of the collar (5) and a part of the housing (2) and wherein a part of the collar (5) is immersed in the fluid when the shaft (1) rotates so as to seal the half-space located axially beyond the collar (5) against oil vapour from the first bath (3).

2. Application of bearing according to claim 1, wherein the shaft (1) is arranged vertically, and wherein the second bath (4) is arranged in a tray (6), and wherein the tray (6) is connected to the housing (2).

3. An application of bearing comprising a shaft (1), a housing (2), a first bath (3) containing oil and located within the housing, and a collar (5) connected to the shaft (1), **characterised in that** the application of bearing comprises a second bath (4) containing a fluid, and wherein the collar (5) is shaped to receive the second bath (4), and wherein the housing (2) is shaped to dip into the second bath (4) when the shaft (1) rotates so as to seal the half-space located axially beyond the collar (5) against oil vapour from the first bath (3).

4. Application of bearing according to claim 3, wherein the shaft (1) is arranged horizontally.

5. The application of bearing according to any one of the preceding claims, wherein the fluid is oil.

## Revendications

1. Assemblage de palier comprenant un arbre (1), une caisse (2), un premier bain (3) contenant de l'huile et disposé à l'intérieur de la caisse, et une manchette (5) reliée à l'arbre (1), **caractérisé en ce que** l'assemblage de palier comprend un deuxième bain (4) contenant un fluide et disposé de telle sorte, de sorte que le fluide qu'il contient mouille à la fois une partie de la manchette (5) et une partie de la caisse (2), et dans lequel une partie de la manchette (5) est immergée dans le fluide lorsque l'arbre (1) tourne, de manière à rendre étanche le demi-espace situé axialement au-delà de la manchette (5) aux vapeurs d'huile provenant du premier bain (3).

2. Assemblage de palier selon la revendication 1, dans lequel l'arbre (1) est disposé verticalement, et dans lequel le deuxième bain (4) est disposé dans une bassine (6), et dans lequel la bassine (6) est reliée à la caisse (2).

3. Assemblage de palier comprenant un arbre (1), une caisse (2), un premier bain (3) contenant de l'huile et disposé à l'intérieur de la caisse, et une manchette (5) reliée à l'arbre (1), **caractérisé en ce que** l'assemblage de palier comprend un deuxième bain (4) contenant un fluide, et dans lequel la manchette (5) est configurée pour recevoir le second bain (4), et dans lequel la caisse (2) est configurée pour s'enfoncer dans le second bain (4) lorsque l'arbre (1) tourne, de manière à rendre étanche le demi-espace situé axialement au-delà de la manchette (5) aux vapeurs d'huile provenant du premier bain (3).

4. Assemblage de palier selon la revendication 3, dans lequel l'arbre (1) est disposé horizontalement.

5. Assemblage de palier selon l'une quelconque des revendications précédentes, dans lequel le fluide est de l'huile.
